# EUROPÄISCHE PATENTSCHRIFT

(11) **EP 1 856 979 B1**
(45) Veröffentlichungstag und Bekanntmachung des Hinweises auf die Patenterteilung: **17.04.2019**
(21) Anmeldenummer: 07108377.8
(22) Anmeldetag: 16.05.2007
(51) Int. Cl.: A21C 3/06

(54) **Maschinelles Teig-Wickelsystem**
Mechanical dough coiling system
Système machinal d'enroulement de pâte

(30) Priorität: 16.05.2006 EP 06400021
(43) Veröffentlichungstag der Anmeldung: 21.11.2007
(73) Patentinhaber: Fritsch GmbH, 97348 Markt Einersheim (DE)
(72) Erfinder: Bernhardt, Udo, 97346, Iphofen (DE)
(74) Vertreter: Götz, Georg Alois

(56) Entgegenhaltungen:
- EP-A1- 0 673 603
- WO-A1-86/02808
- NL-A- 8 403 780

## Beschreibung

Die Erfindung betrifft ein Verfahren zum maschinellen Herstellen eines gewickelten Teigprodukts gemäß Oberbegriff des Anspruchs 1. Ferner betrifft die Erfindung eine Anordnung oder Vorrichtung zum Herstellen gewickelter Teigprodukte, welche insbesondere zur Durchführung des Verfahrens geeignet ist, gemäß Oberbegriff des Patentanspruchs 13.

Zum Stand der Technik wird auf DE-A-29 09 296 (H. Danger KG), WO 86/02 808 (OSTALI), WO 99/49 736 (FRITSCH) und EP-B-0 673 603 (RHEON) verwiesen.

Zur Bildung gewickelter Teigprodukte mit Füllung aus einem Ausgangsteigstück in dreieckiger Grundform wird in WO 86/02 808 vorgeschlagen, das Dreieck-Teigstück mit einer vorauseilenden Dreieckseite zwei schwenkbar angelenkten Wickellatten zuzuführen, die in Teigförderrichtung nebeneinander beabstandet sind, um Platz für die Teigstück-Füllung zu lassen. In der Längsansicht weisen die Wickellatten einen konvex-winkligen Verlauf auf, welcher dem Förderband gegenüber liegt. Davon verläuft ein in Teigförderrichtung erster Abschnitt schräg zum Förderband, während sich der über einen Winkel anschließende, zweite Abschnitt parallel zum Förderband erstreckt. Der Schrägabschnitt dient dazu, den vorauseilenden Stirnrand des Ausgangsteigstücks hochzuschlagen. Zu diesem Zweck ist eine Riffelung oder sonstige Aufrauung an den Unterseiten der Wickellatten vorgesehen. Zur weiteren Erleichterung des Hochschlagens wird eine Abwandlung dahingehend vorgeschlagen, dass zwei hintereinander geschaltete Förderbänder eingesetzt werden, von denen das zweite mit seiner anfänglichen Messerkante etwas höher positioniert ist als das in Förderrichtung vorhergehende. Bei beiden Ausführungen dienen Druckräder dazu, das Teigstück gegen das Förderband zu pressen, damit dieses auch ausreichend Schub in Förderrichtung bekommt. Ferner wird bei beiden Ausführungen vorgeschlagen, das Wickeln mit Hilfe einer flexiblen Schleppe oder einer steifen Wickellatte zu vervollständigen, welche jeweils das Ende der Wickelpassage bilden.

Aus WO 99/49 736, insbesondere dortige Figur 12, sind Teigrand-Hochstellmittel in Form von anlenkbaren Hebellaschen 36 bekannt, die um eine quer zur Förderrichtung verlaufende Anlenkachse vom herangeförderten Teigstück verschwenkbar angelenkt sind. Das freie Ende der Hebellasche ist zum Hochstellen des vorauseilenden Teig-Stirnrandes mit einem zur Oberfläche des Förderbandes 9 vorspringenden Haken ausgebildet. Das eigentliche Teigwickeln erfolgt auf einem entfernt nachgeordneten, separaten Wickelförderer 22.

EP-B-0 673 603 beschreibt einen Apparat zum Aufwickeln von Teigstücken für Hörnchen. Das Wickeln wird ebenfalls mit Hilfe eines Paares in Förderrichtung nebeneinander liegender, beabstandeter Presslatten oder Wickellatten mit aufgerautem Gummi an den Unterseiten zur Erleichterung der Teigrand-Hochstellung durchgeführt, welche Press- oder Wickellatten jeweils von aktiven Antrieben quer zur Förderrichtung verstellbar sind. Die aktiven Stellantriebe sind Bestandteil eines Regelkreises und werden im Zusammenhang mit einer Teigsensorik gesteuert. Dadurch wird eine automatische, aktive Einstellung des jeweiligen Abstands der Press- bzw. Teigwickellatten quer zur Förderrichtung herbeigeführt. Bei diesem bekannten Wickelapparat wird sowohl das Hochstellen des vorauseilenden Stirnrandes des dreieckigen Teigstücks als auch das nachfolgende Wickeln mit ein und derselben Baueinheit, nämlich den Press- oder Wickellatten, bewerkstelligt.

Der Erfindung liegt die Aufgabe zugrunde, bei der maschinellen Herstellung gewickelter Teigprodukte eine Erhöhung der Geschwindigkeit des Teigwickelprozesses insbesondere beim Übergang vom anfänglichen Teigeinschlagen in das in sich Einrollen zu erreichen. Zur Lösung werden das im Patentanspruch 1 angegebene Verfahren und die im Patentanspruch 13 angegebene Anordnung oder Vorrichtung zum Herstellen gewickelter Teigprodukte vorgeschlagen. Mit einer Hebe- und Hochstelleinrichtung lässt sich die Funktionszuverlässigkeit des anfänglichen Teigeinschlagens erhöhen. Mit einer Streckeinrichtung zum Verlängern von auf einer Förderunterlage befindlichen Ausgangsteigstücken lässt sich sowohl die Anzahl der Wicklungen, welchen das Teigstück unterworfen wird, als auch die schraubenartige Steigung der Wicklungsränder beziehungsweise -kanten bzw. des schraubenähnlich verlaufenden, in sich eingeschlagenen Teigrandes beeinflussen.

Weitere, optionale Ausgestaltungen der Erfindung ergeben sich aus den abhängigen Ansprüchen.

Nach einem Aspekt der Erfindung kooperieren bei dem im ersten Absatz genannten Verfahren die Hochstellmittel für den vorauseilenden Teigstückrand und die Mittel zum Wickeln bzw. Einrollen des Teigstücks in derartiger Koordination miteinander, dass der jeweilige Abstand der Hochstellmittel und der Wickelorgane zu der gegenüberliegenden Förderunterlage zumindest zeitweise erweitert wird. Dadurch wird ein ausreichend weiter, unbehinderter Durchgang und/oder Übergang für das bereits am Stirnrand hochgestellte oder eingeschlagene Teigstück in die eigentliche Wickelpassage zwischen dem oder den Wickelorganen und der Förderunterlage sichergestellt. Vor allem werden die Hochstellmittel bei Eintreffen eines Ausgangsteigstücks bzw. beim Anstoßen des Ausgangsteigstücks mit seiner vorauseilenden Kante gleichsam als Stellglieder dazu verwendet, die Wickelorgane in Stellung im Sinne einer vergrößerten Eingangspassage in den Wickeldurchgang zu versetzen.

Nach einem weiteren Aspekt der Erfindung verändert ein auf die Hochstelleinrichtung auftreffendes Ausgangsteigstück die Stellung oder Position der Hochstelleinrichtung im Sinne einer Verbreiterung des Durchgangskanals zur Wickeleinrichtung. Mit dem Verstellen der Hochstelleinrichtung veranlasst letztere eine resultierende Verstellung der Wickeleinrichtung ebenfalls im Sinne einer Vergrößerung des Abstands zur Förderunterlage, wodurch sich eine Verbreiterung der Wickelpassage ergibt. Dadurch wird die Aufnahme und Weiterbeförderung des Ausgangsteigstücks und das Einrollen, das mit einer zunehmenden Vergrößerung des Wickeldurchmessers verbunden ist, erleichtert.

Gemäß einer besonderen Erfindungsausbildung werden das oder die Hochstellmittel mit Anschlag einer Teigstückkante von der Förderunterlage weg angehoben und bilden dabei einen Übergang zur Wickelpassage. Das erfindungsgemäße Zusammenwirken des oder der Hochstellmittel mit dem oder den Wickelorganen kann beispielsweise dahingehend konkretisiert sein, dass das oder die Hochstellmittel das oder die nachfolgenden Wickelorgane untergreifen oder anheben, wodurch sich vom Hochstelldurchgang ein nahtloser, kantenfreier Übergang zur Wickelpassage bildet. Ein weiterer Vorteil der Erfindung besteht darin, dass das oder die Hochstellmittel sogleich wieder in eine Ausgangsstellung zurückfallen können, die näher zur Förderunterlage liegt. In dieser Ausgangsstellung sind das oder die Hochstellmittel erneut bereit, das nächste angeförderte Teigstück am vorauseilenden Stirnrand zu erfassen und anzuheben. Dabei kann das vorausgegangene Teigstück sich noch in der Wickelpassage im Wickelprozess befinden. Die damit erzielbare Erhöhung des Teigstück-Durchsatzes und der Produktionsgeschwindigkeit aufgrund einander überlappender Teigstück-Verarbeitung liegt auf der Hand.

Insbesondere wenn nach einer vorteilhaften Erfindungsausbildung zumindest die erste und zweite Verfahrensphase auf einer gemeinsamen Förderunterlage durchgeführt werden, wird das fließende Ineinandergehen des Hochstellens des Teigrands und des Einrollens des Teigstücks erleichtert. Störungsträchtige Lücken oder Kanten beim Übergang vom Hochstelldurchgang in die Wickelpassage sind vermieden. Insbesondere in Verbindung mit dieser genannten Erfindungsausbildung lassen sich die erste und die zweite Phase einander zeitlich und/oder örtlich überlappend durchführen, was den Teigstück-Durchsatz und die Produktionsgeschwindigkeit weiter fördert.

Im Falle des Einsatzes eines oder mehrerer Wickelorgane, die zum Ausgleich des sich beim Wickelprozess vergrößernden Teigstück-Durchmessers verschwenkbar von und zur Förderunterlage angelenkt sind, besteht eine beispielhafte Konkretisierung der Erfindungsidee darin, die Schwenk- oder auch Rotationsachse (im Falle von drehbaren Wickelorganen) bei Einwirkung und/oder Anlage des oder der Hochstellmittel von der Förderunterlage zu entfernen bzw. in einem größeren Abstand zu versetzen. Durch diesen Versatz der Wickel-Schwenkachse, die zweckmäßig im Eingangsbereich der Wickelpassage angeordnet ist, wird für das am Rand bereits hochgestellte Teigstück ein freier, ausreichend großer problemloser Übergang bzw. Durchgang zur Wickelpassage geschaffen.

Um den Teig-Wickelprozess schonend und auch zuverlässig, insbesondere ohne Teigstau, durchführen zu können, wird eine Erfindungsausbildung dahingehend vorgeschlagen, dass beweglich und/oder frei schwimmend gelagerte Wickelmittel verwendet werden, die Krafteinwirkungen der in die Wickelpassage eintreffenden Teigstücke durch rotatorische und/oder translatorische Ausgleichsbewegungen kompensieren.

Um die Wickeleinrichtung in die Aufnahmestellung für das Teigstück zweckmäßig versetzen zu können, ist nach einer Erfindungsausbildung vorgesehen, dass die Hochstelleinrichtung zumindest teilweise zwischen der Wickeleinrichtung der Förderunterlage oder schräg unterhalb der Wickeleinrichtung positioniert ist, so dass ein Untergreifen der Wickeleinrichtung durch die vom ankommenden Ausgangsteigstück verstellte Hochstelleinrichtung möglich ist. Dieses Untergreifen wird durch Abschrägungen, Wölbungen oder Ausnehmungen erleichtert, mit denen die Wickeleinrichtung in ihrem Eingangsbereich oder im Eingriffsbereich für die Hochstelleinrichtung gestaltet ist.

Es liegt im Rahmen der Erfindung, gewickelte Teigprodukte mit spezifischem Aussehen dadurch zu schaffen, dass vor Eintritt in die im Anspruch 1 genannte erste Phase die Ausgangsteigstücke in Förderrichtung gestreckt und/oder zur Förderrichtung verbreitert werden. Beim Strecken in Förderrichtung lassen sich vorteilhaft konkav nach innen gewölbte Seitenränder schaffen, welche nach dem Aufwickeln eine sich über die Teigproduktlänge ändernde Steigungskontur ergeben. In diesem Sinne lassen sich gewickelte Teigprodukte mit besonderem Aussehen, beispielsweise als spanische oder italienische Croissants, erzeugen, indem vor dem Wickeln entsprechend taillierte Dreiecksformen erzeugt werden. Dazu werden vor Eintritt in die erste Phase das oder die Ausgangsteigstücke in Förderrichtung gestreckt und/oder quer zur Förderrichtung verbreitert. Beim Strecken bzw. Langziehen in Förderrichtung werden die parallel zur Förderrichtung verlaufenden Seitenränder konkav nach innen gewölbt. Im Falle von Teigstücken mit Dreieck-Grundform wird so die typisch taillierte Dreiecksform für spanische und italienische Croissants erzeugt. Zudem kann man je nach Langziehen die Wicklungsanzahl erhöhen oder erniedrigen. Der Länge kann die Dreieckshöhe eines in der Grundform dreieckigen Teigstücks äquivalent sein, wobei bei vorzugsweise gleichschenkligen Dreiecksformen die Basis den in Förderrichtung vorauseilenden Stirnrand bildet. Dies lässt sich mit der Streckeinrichtung realisieren.

Gemäß einer Erfindungsalternative wird das Ausgangsteigstück verbreitert, indem es quer zur Förderrichtung ausgewalzt wird. Dies lässt sich besonders effektiv bei Teigstücken mit dreieckförmiger Grundform und vorauseilender Dreiecksbasis durchführen. Mit Verbreiterung der Dreiecksbasis ergeben sich nach dem Wickeln die für italienische oder spanische Croissants typischen schlanken, langen Enden.

Zum Ausgleich der Formveränderungen des sich in der Wickelpassage befindenden Teigstücks liegt es im Rahmen der Erfindung, dass die Wickeleinrichtung translatorisch und/oder rotatorisch auslenkbar oder sonst schwimmend gelagert ist, zweckmäßigerweise wenigstens in einer Richtung zur Förderunterlage, um Bewegungen zum Ausgleich der sich vergrößernden Teigstück-Wickeldurchmesser durchführen zu können. Für die rotatorischen Ausgleichs- bzw. Schwenkbewegungen der Wickeleinrichtung oder deren Teile ist wenigstens eine Schwenkachse im Abstand zur Förderunterlage und quer und parallel zur Förderrichtung zweckmäßig. Eine erfindungsspezifische Ausbildung besteht in diesem Zusammenhang darin, dass diese Schwenkachse Hebe- und Senkbewegungen in einer Richtung von und zu der Förderunterlage unterworfen wird. Diese Hebe- und Senkbewegungen werden entsprechend der allgemeinen Erfindungsidee von der mit einem angelieferten Teigstück beaufschlagten Hochstelleinrichtung ausgelöst.

Zur Realisierung des letztgenannten Gedankens ist es denkbar, dass die Hochstelleinrichtung schwenkbar an einer stationären Basis, und die Wickeleinrichtung ebenfalls schwenkbar an der Hochstelleinrichtung angelenkt sind. Bei Verstellung der Hochstelleinrichtung durch ein ankommendes Teigstück wird so gleichzeitig die Schwenkachse der Wickeleinrichtung mit hochgehoben (und nach Gelangen des Teigstücks in die Wickelpassage) wieder heruntergeschwenkt. Eine dazu alternative Konkretisierung besteht darin, dass die Dreh- oder Schwenkachse der Hochstelleinrichtung an einer Basis stationär gehalten ist, und die Dreh- oder Schwenkachse der Wickeleinrichtung über einen oder mehrere zwischengeschaltete Schwenkhebel ebenfalls an dieser Basis angelenkt ist. Durch den oder die Schwenkhebel gewinnt die Wickeleinrichtung oder deren Schwenkachse einen oder mehrere zusätzliche Freiheitsgrade zum Abheben oder Absenken gegenüber der Förderunterlage in Koordination mit der Hochstelleinrichtung. Mit Hochstellen des Randes des aktuellen Teigstücks lässt sich so für dieses ein problemloser Übergang zur Wickelpassage schaffen.

Es entspricht dem oben genannten, allgemeinen Konzept der frei schwimmenden Lagerung, dass bei Realisierung der Wickeleinrichtung mit beispielsweise zueinander in Förderrichtung parallelen Wickelbalken oder -latten mit Abstand untereinander diese in einer Ebene mit Bewegungsspiel gelagert sind, die etwa parallel zur Förderunterlage verläuft. Das Bewegungsspiel dient dazu, auf den während des Wickelprozesses anwachsenden "Mittelbauch" des Teigstücks mit Ausgleichsbewegungen zu reagieren.

Zur Erhöhung der Modularität und Wartbarkeit bei Teigverarbeitungslinien ist es vorteilhaft, die erfindungsgemäße Anordnung oder Vorrichtung als Einbau- oder Nachrüstkassette ("Wickelkassette") auszubilden, die beispielsweise über Bolzenbefestigungen am Maschinenrahmen der Teigbearbeitungslinie befestigbar ist. Dabei sind die Hochstelleinrichtung und die Wickeleinrichtung in einem eigenen Rahmen zusammengefasst, der wiederum über die genannte Bolzeneinrichtung am (Haupt-) Rahmen der Teigbearbeitungslinie befestigbar ist. Die Bolzeneinrichtung lässt sich beispielsweise mit Ziehbolzen realisieren, worüber die Wickelkassette im Hauptrahmen ver- und entriegelbar ist. Zweckmäßig kann die Wickelkassette an ihren Außenseiten mit Traggriffen versehen sein, um die Handhabbarkeit zu erhöhen.

Ist gemäß einer optionalen Erfindungsausbildung dem Wickeldurchgang ein quer zur Förderrichtung wirkendes Querroll- oder Querwalzgerät, eine parallel zur Förderrichtung wirkende Teigstreck-Einrichtung zur Verlängerung der Teigstück-Geometrie und/oder eine Füll- und/oder Befeuchtungsstation vorgeschaltet, lässt sich ein konturenbetontes Wickeln der Teigstücke realisieren. Die Streckeinrichtung dient zum Verlängern des Teigstücks in Förderrichtung, insbesondere zum Verlängern der Dreieckhöhe bei einem Teigstück mit dreieckförmiger Grundform und vorauseilender Dreiecksbasis. Das Querroll- oder Querwalzgerät verbreitert eine derartige Dreiecksbasis, damit das Teigstück nach dem Wickeln schlanke Enden erhält. Die Befeuchtungsstation ist vor allem einer Teigstückspitze zugeordnet, damit das Teigstück nach dem Wickeln geschlossen bleibt.

Der Verminderung von Produktionsunterbrechungen wegen Wartungsarbeiten, insbesondere Reinigung der Teigverarbeitungselemente dient die Hebe- oder Hochstelleinrichtung mit ihrem Greifprofil, das sich durch durchgehende Schlitze auszeichnet. Diese zwischen Stegen begrenzten Schlitze bilden nach in Teig-Förderrichtung weisende Öffnungen für Teigabrieb. Dieser kann durch die Schlitze bzw. Öffnungen hindurchgelangen, ohne letztere zu verstopfen. Dadurch bleibt das Greifprofil mit seiner Struktur im Teigbearbeitungsprozess weitgehend unverändert. Damit lassen sich eine erhöhte Zuverlässigkeit für den Teigwickelprozess und eine Erhöhung der Verfügbarkeit der Teigstück-Bearbeitungsanlage erzielen.

Um das Greifprofil für die ankommenden Teigstück-Stirnränder griffiger zu gestalten, sind die Querstege, welche die Schlitze begrenzen, in Richtung zu den Teigstück-Rändern erhöht bzw. erhaben bzw. vorspringend ausgeführt. Dies lässt sich einfach und kostengünstig durch Aufschweißen oder Auflöten der Querstege auf einem Tragrahmen für das Greifprofil realisieren.

Gemäß einer optionalen Erfindungsausbildung weisen die Querstege zur Bildung der Durchgangsschlitze Abstände voneinander auf, die kleiner als die Stärke bzw. Dicke zugeordneter Teigstücke bemessen sind. Andererseits ist die Schlitzgröße so groß gestaltet, dass noch Durchlass von Teigabrieb im Sinne einer offenen Teigstück-Anreißeinheit möglich ist. Ein Quersteg-Abstand zwischen zwei bis fünf Millimeter, beispielsweise drei Millimeter hat sich als praxistauglich erwiesen. Der Durchmesser bzw. die Dicke der Querstege beträgt zweckmäßig zwischen 1,5-3 Millimeter, beispielsweise zwei Millimeter.

Zum Langziehen besitzt die oben genannte Streckeinrichtung zwei Förderbänder, nämlich ein erstes Förderband als Zuführförderband und ein zweites wegführendes Förderband, wobei das zuführende Förderband langsamer als das wegführende Förderband läuft und damit als Streckband fungiert. Das Streckmaß lässt sich zweckmäßig über einen SteuerEingang in die Streckeinrichtung einstellen, womit die Differenzgeschwindigkeit zwischen den beiden Förderbändern eingestellt wird. Zweckmäßig sind dabei Andrückorgane, welche dazu dienen, den Kontakt des langzustreckenden Teigstückes zum Zuführ- bzw. Wegführförderband herzustellen. Dazu presst das jeweilige Andrückorgan einen anliegenden Abschnitt des Teigstücks auf das Zuführ- oder Wegführförderband.

Das Verhältnis der unterschiedlichen Zuführ- und Wegführgeschwindigkeiten entspricht dem Verhältnis, entsprechend welchen das Teigstück gestreckt oder gedehnt werden soll. Dieses Streckverhältnis beeinflusst die Kontursteigungen, mit welchen später im Wickelprozess das Teigstück aufgewickelt wird. Durch das Langziehen werden außerdem die vom vorauseilenden Stirnrand ausgehenden Seitenränder des Teigstücks, bei dreieckiger Grundform die beiden Dreiecksschenkel, nach innen gewölbt, was sich anschaulich mit "Trichterform" umschreiben lässt. Zudem entsteht beim Aufwickeln im Mittelabschnitt ein vergrößerter Durchmesser, woraus im Aussehen eine bauchigere Form für das gewickelte Teigstück resultiert. Mit der variierenden Kontursteigung variieren auch die Abstände zwischen den ähnlich einem Schraubengang verlaufenden Wickelränder.

Zweckmäßig ist wenigstens ein Andrückorgan, vorzugsweise das dem Zuführförderband zugeordnete, in der Querrichtung so ausreichend schmal ausgeführt, dass reine Abwalzeffekte, welche lediglich ein Flachdrücken bewirken, vermieden sind. Diese Abwalzeffekte würden die erwünschte Verzerrung der Seitenflanken des Teigstücks nach innen und die durch das Dehnen angestrebte Verjüngung des Querschnitts in Förderrichtung beeinträchtigen.

Weitere Einzelheiten, Merkmale, Merkmalskombinationen, Vorteile und Wirkungen auf der Basis der Erfindung ergeben sich aus der nachfolgenden Beschreibung bevorzugter Ausführungsformen der Erfindung sowie aus den Zeichnungen. Diese zeigen in:
- Figur 1: eine perspektivische Ansicht von schräg oben auf die beispielhafte Kombination oder Anordnung von Hochstell- und Wickeleinrichtung mit vorgeordneter Befeuchtungsstation;
- Figur 2: eine perspektivische Ansicht von schräg oben auf die Streckeinheit;
- Figur 3: eine perspektivische Ansicht von schräg oben auf eine alternative Streckeinheit;
- Figur 4: eine perspektivische Ansicht von schräg oben etwa entgegen der Förderrichtung auf die Befeuchtungsstation mit vorgeordneter Querrolleinrichtung ;
- Figur 5: in Seitenansicht die Anordnung oder Kombination Hochstelleinrichtung/Wickeleinrichtung;
- Figur 6: eine perspektivische Ansicht von schräg oben etwa entgegen der Förderrichtung auf die Hochstell-/Wickeleinrichtung nach Figur 5;
- Figur 7: eine in Förderrichtung gesehene Stirnansicht auf die Hochstelleinrichtung;
- Figur 8: eine entgegen der Förderrichtung gesehene Stirnansicht auf die Wickeleinrichtung;
- Figur 9: eine teilweise abgeschnittene Unteransicht auf die Vorrichtung nach Figur 5;
- Figur 10: eine etwa Figur 9 entsprechende Ansicht auf dieselbe Vorrichtung, jedoch in perspektivischer Darstellung;
- Figur 11: eine weitere perspektivische Darstellung von schräg unten auf die Vorrichtung nach Figur 5 (oder 6);
- Figur 12: eine perspektivische Seitenansicht auf die Hochstelleinrichtung etwa quer zur Förderrichtung;
- Figur 13: eine perspektivische Seitenansicht auf die Hochstelleinrichtung etwa schräg zur Teigstück-Förderrichtung mit gerade anstoßendem Ausgangsteigstück;
- Figur 14: in entsprechender Ansicht die Wirkungsweise der Hochstelleinrichtung am Ausgangsteigstück (erste Phase);
- Figur 15: in Draufsicht ein an den stirnseitigen Ecken hochgeklapptes Ausgangsteigstück (Ergebnis der ersten Phase);
- Figur 16: in entsprechender perspektivischer Darstellung die Mitnahme und das Einschlagen des gesamten Stirnrandes sowohl der Hochstelleinrichtung als auch der Wickeleinrichtung (zweite Phase);
- Figur 17: in entsprechender perspektivischer Ansicht die Fortsetzung des Wickelvorgangs, nachdem der eingeschlagene Stirnrand des Ausgangsteigstücks den Hochstelldurchgang verlassen hat (Beginn dritte Phase);
- Figur 18: in entsprechender perspektivischer Ansicht die vollständig herabgeschwenkte Hochstelleinrichtung nach Verlassen und Weiterbeförderung des teilweise bearbeiteten Teigstücks in die Wickelpassage.

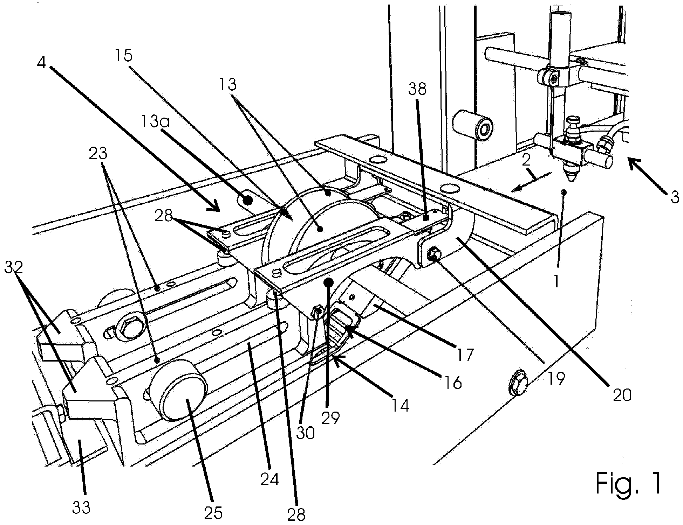

Gemäß Figur 1 sind gegenüber einer Förderunterlage 1 mit Förderrichtung 2, beispielsweise einem üblichen Förderband, eine Befeuchtungsstation 3 und eine Wickelstation 4 in Förderrichtung 2 hintereinander angeordnet.

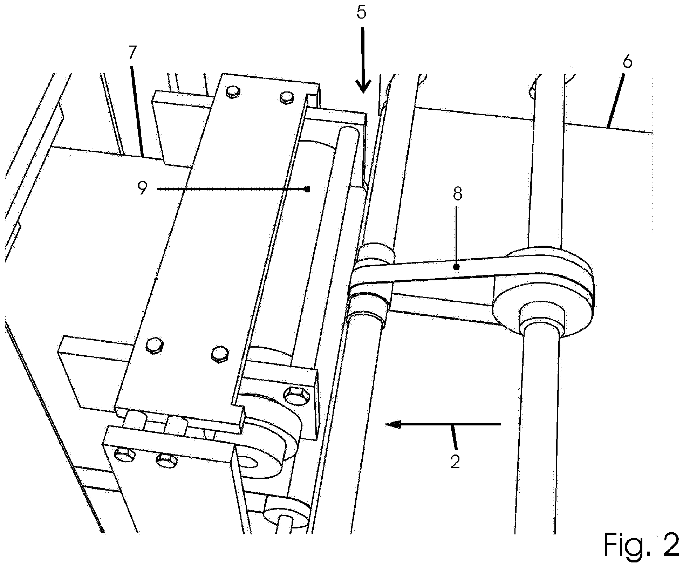

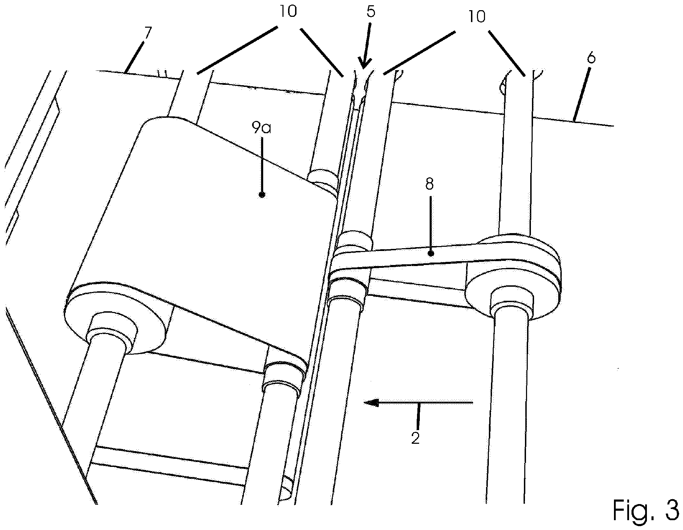

Gemäß Figur 2 kann der Befeuchtungsstation 3 eine Streckeinrichtung 5 vorgeordnet sein. Diese weist, jeweils in Förderrichtung 2 verlaufend, ein Zuführförderband 6 und ein Wegführförderband 7 auf, welche mit unterschiedlichen Fördergeschwindigkeiten betreibbar sind. Zum Zwecke des Streckens und Langziehens eines Teigstücks wird das Zuführförderband 6 mit langsamerer Fördergeschwindigkeit als das Wegführförderband 7 betrieben. Das (in Figur 2) nicht gezeichnete Teigstück wird mittels eines schmalen Andrückriemens 8 auf die Oberfläche des Zuführförderbandes 6 gedrückt. Eine äquivalente Funktion gegenüber dem Wegführförderband 7 erfüllt die Andrückrolle 9, welche dem Andrückriemen 8 nachgeordnet ist und sich mit ihrer Längs- bzw. Drehachse quer zur Förderrichtung 2 über die Oberfläche des Wegführförderbandes 7 erstreckt. Bei der alternativen Ausführung der Streckeinrichtung nach Figur 3 ist die Andrückrolle 9 durch ein gegenüber dem Andrückriemen 8 breiteres Andrückband 9a ersetzt. Die größere Breite des Andrückbandes 9a bzw. der Andrückrolle 9 im Vergleich zum jeweiligen Andrückriemen 8 ist insofern zweckmäßíg, als Teigstücke vielfach in Croissantform gewickelt werden, und als Ausgangsteigstücke dafür dreieckförmig ausgeschnittene Teiglinge dienen, bei denen die Dreiecksbasis die in Förderrichtung 2 vorauseilende Stirnseite bildet und quer zur Förderrichtung 2 verläuft. Mit der größeren Breite der dem Wegführförderband 7 zu geordneten Andrückorgane lässt sich ein erhöhter reibschlüssiger Eingriff mit dem anzudrückenden Teigstück und seinem verhältnismäßig breiten Stirnrand erzielen. Die Antriebs- und Umlenkwellen 10, um welche die Andrückriemen 8 und das Andrückband 9a geführt sind, verlaufen zueinander parallel und quer zur Förderrichtung 2.

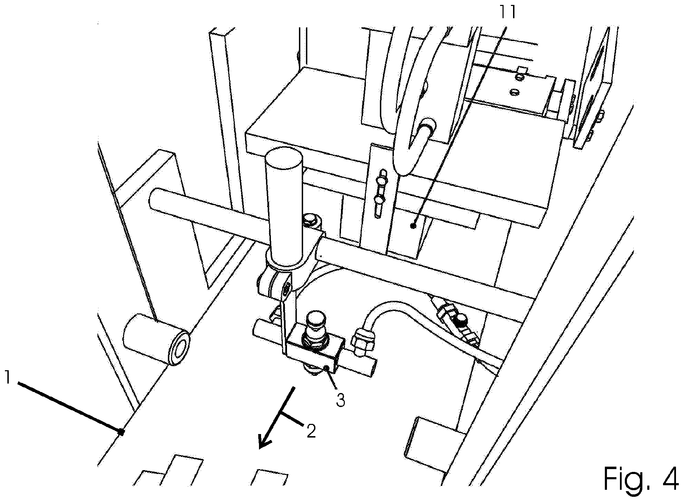

Gemäß Figur 4 kann im Rahmen der Erfindung der Befeuchtungsstation 3 eine Querwalz- oder Querrolleinrichtung 11 in Förderrichtung 2 vorgeordnet, insbesondere der Befeuchtungsstation 3 und der Streckeinrichtung 5 zwischengeschaltet sein. Die Querrolleinrichtung ist zeichnerisch nur schematisch angedeutet und kann beispielsweise mit zwei (nicht gezeichneten) Querrollen realisiert sein, welche entlang einer Führung quer zur Förderrichtung 2 jeweils von innen nach außen und umgekehrt verfahrbar sind. Mit dem von innen nach außen Verfahren erfolgt die Verbreiterung des Teigstücks, insbesondere der Basis bei dreieckiger Grundform, woraus sich besonders dünne Wicklungsenden bei einem fertig gewickelten Teigstück ergeben. Die Förderunterlage 1 kann identisch mit dem Wegführförderband 7 gemäß Figur 2 oder 3 sein.

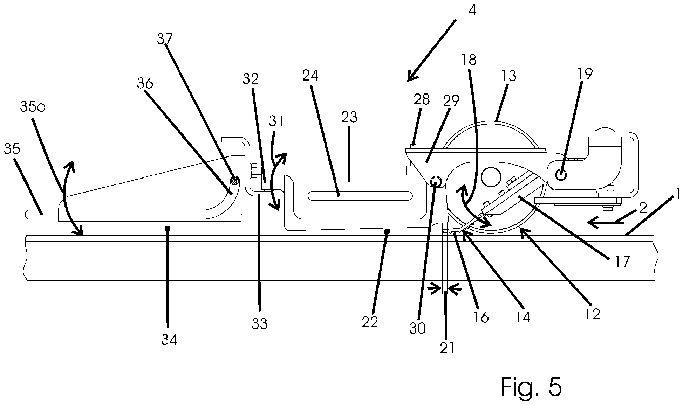

Gemäß Figur 5 (siehe auch Figur 1) wird ein zu wickelndes Teigstück nach Verlassen der Befeuchtungsstation zur Wickelstation 4 auf der Förderunterlage 1 transportiert. Dabei gerät das Teigstück zunächst in einen Andrückdurchgang 12, der zwischen der Förderunterlage 1 und mehreren parallelen Andrückscheiben 13 gebildet ist. Diese sorgen dafür, dass das Teigstück in einem reibschlüssigen Kontakt mit der Förderunterlage 1 steht. Zum anderen üben die Andrückscheiben 13 Schubkräfte auf das Teigstück aus, damit es nicht im nachfolgenden Hochstelldurchgang 14 liegen bleibt, sondern darin hinein- und durchgeschoben wird. Weiterhin sorgen die Andrückscheiben 13 für eine Führung der Teigstücke parallel zur Förderrichtung 2. Zu diesen Zwecken sind die Andrückscheiben 13 auf einer gemeinsamen Achse und/oder Welle 13a befestigt. Gemäß Figur 1 weisen die beiden Andrückscheiben 13 zwischen sich einen Spalt 15 auf, damit dazwischen etwaiges Füllgut auf einem Teigstück unzerdrückt hindurchgelangen kann.

Gemäß Figuren 5 und 1 wird der Hochstelldurchgang 14 durch die Förderunterlage 1 und durch leiter- und/oder sprossenartige Greifprofile 16 begrenzt, welche jeweils am Ende einer Hebellasche 17 befestigt ist. Letztere ist für Schwenkbewegungen 18 um eine Schwenkachse 19 angelenkt, welche ein Wickelmaschinen-Rahmenteil 20 quer zur Förderrichtung 2 durchsetzt.

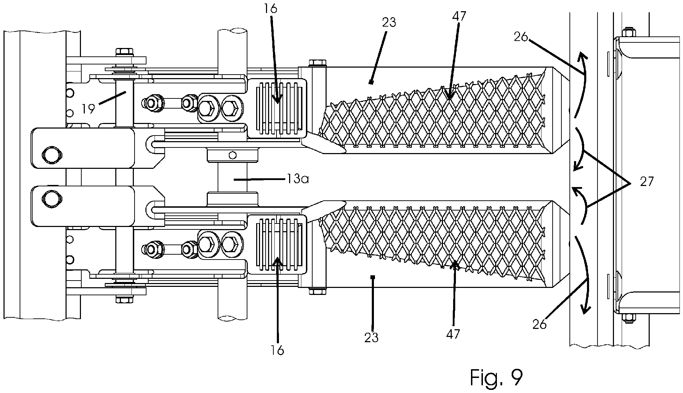

Gemäß Figur 5 geht der Hochstelldurchgang 14 mit Überlappungsbereich 21 über in eine Wickelpassage 22. Diese wird begrenzt durch die Förderunterlage 1 und durch zwei, je einem Ende des fertiggewickelten Teilstücks zugeordnete Wickellatten 23 (siehe Figur 1). Diese verlaufen zueinander und zur Förderrichtung 2 parallel und sind in entsprechenden Richtungen mit Langaufnahmen 24, im gezeichneten Beispiel Langausnehmungen, zum Einsetzen, Führen, Verschieben und Befestigen von Andrückgewichten 25 (siehe Figur 1) versehen. Aufgrund der schwimmenden Lagerung der Wickellatten 23 ist ihnen ein Bewegungsspiel ermöglicht, gemäß Figur 9 beispielsweise ein Spreizspiel 26 nach außen und komplementäre Schwenkbewegungen 27 nach innen. Dieses Ausgleichs-Bewegungsspiel ist optional und richtet sich nach der Präzision und Spielfreiheit der bewegbaren Lagerung. Zur Einstellung der Wickellatten 23 ist ferner eine Einstellschraube 28 angeordnet, welche das in Förderrichtung 2 gesehen vordere Ende eines Schwenkhebels 29 durchsetzt und sich gegen das Hinterende der Wickellatte 23 abstützt. Die Wickellatte 23 ist an ihrem Hinterende über eine quer zur Förderrichtung 2 verlaufende Schwenkhebelachse 30 am Vorderende des Schwenkhebels 29 angelenkt. Aufgrund dieser gelenkigen Verbindung lässt sich über die Einstellschraube 28 ein Winkel zwischen der jeweiligen Wickellatte 23 und dem Schwenkhebel 29 einstellen. Dadurch kann verhindert werden, dass die Wickellatte 23 auf der Förderunterlage aufliegt und darauf schleift. Die den Wickellatten 23 entfernten Hinterenden der Schwenkhebel 29 sind gelenkig an derselben Schwenkachse 19 befestigt, bezüglich welcher der Hebellasche 17 Schwenkbewegungen 18 erteilt werden können.

Die schwimmende Lagerung für die beiden Wickellatten 23 wird durch deren Anlenkung an die Vorderenden der Schwenkhebel 29 um die Schwenkhebelachse 30 weiter gefördert. Die Wickellatten 23 können so mit zunehmendem Wickeldurchmesser der in der Wickelpassage 22 bearbeiteten Teigstücke eine komplementäre Ausgleichs-Schwenkbewegung 31 in einer vertikalen bzw. zur Förderunterlage 1 senkrechten Ebene nach oben ausführen. Hat das fertig gewickelte Teigstück aufgrund des Vorwärtstransports durch die Förderunterlage 1 die Wickelpassage 22 verlassen, wird die genannte komplementäre Ausgleichs-Schwenkbewegung 31 aufgrund der Schwerkraft wieder soweit rückgängig gemacht, bis die in Förderrichtung 2 gesehenen Vorderenden 32 der Wickellatten 23 auf eine jeweilige Anschlagschulter 33 zur Auflage kommen, welche über Schraubbefestigungen an einem Teil des allgemeinen Maschinenrahmens angebracht ist.

Gemäß Figur 5 schließt sich an die Wickelpassage 22 noch ein optionaler Endwickeldurchgang 34 an, der durch die Förderunterlage 1 und durch ein oder mehrere Wickelplatten 35 begrenzt ist. Letztere sind zweckmäßig auch zweifach angeordnet und je einem Teigwickel-Endabschnitt zugeordnet. Die in Förderrichtung 2 gesehen hinteren, nach oben gebogenen Enden 36 sind um eine Plattenschwenkachse 37 in einer vertikalen Ebene schwenkbar gelagert, wobei die Plattenschwenkachse 37, ebenso wie die Schwenkhebelachse 30 oder die der Hebellasche 17 und dem Schwenkhebel 29 gemeinsame Schwenkachse 19, im Maschinenrahmen stationär gelagert sind. Hat das fertig gewickelte Teigstück den Endwickeldurchgang 34 verlassen, senkt sich in einer entsprechenden Schwenkbewegung 35a in einer vertikalen Ebene die Wickelplatte in Richtung zur Förderunterlage 1. Anstelle der Wickelplatten 35 kann auch eine an sich bekannte, flexible Wickelmatte oder -schleppe am Maschinenrahmen nach den Wickellatten 23 so befestigt sein, dass das in Förderrichtung vordere Mattenende auf der Oberfläche der Förderunterlage 1 entlang schleift, wobei darunter ein Teigwickel fertig gerollt werden kann.

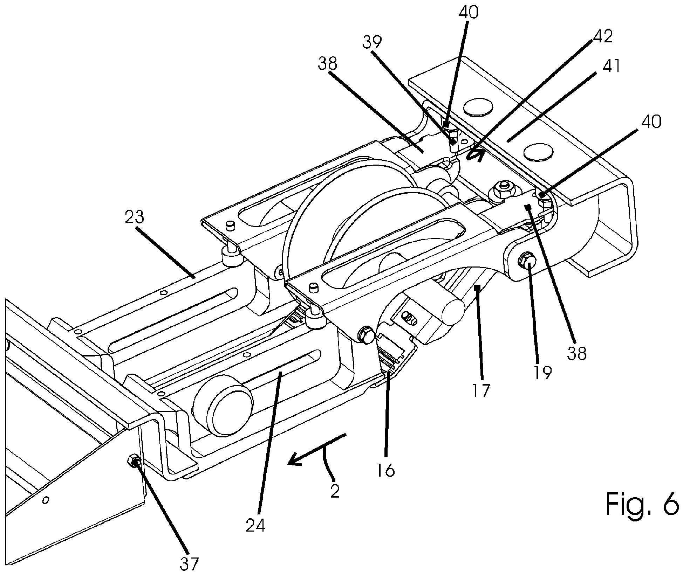

Gemäß Figur 6 sind die Hebellaschen 17 jeweils mit einer Schwenkhubbegrenzung ausgebildet, mittels welcher eine ausreichende Höhe für den Hochstelldurchgang 14 bzw. ein ausreichender Abstand zwischen dem Greifprofil 16 und der Förderunterlage 1 sichergestellt ist. Die jeweilige Schwenkhubbegrenzung umfasst einen am in Förderrichtung 2 gesehen hinteren Ende der Hebellasche 17 ausgebildeten Ansatz 38, von dessen der Förderunterlage abgewandten Oberseite mindestens ein Anschlagelement 39 hochragt. Dieses ist im gezeichneten Beispiel als nach oben vorspringender Stift mit radial erweitertem Anschlagkopf 40 am oberen freien Ende gestaltet. Das Gegenanschlagelement 41 ist im konkret gezeichneten Beispiel als Anschlag-Querbügel ausgeführt, welcher den beiden gezeichneten Anschlagelementen 39 mit seiner Unterseite 42 zugeordnet ist. Wird durch Transport auf der Förderunterlage 1 (in Figur 6 nicht gezeichnet) entsprechend der Förderrichtung 2 ein Teigstück zum Anstoß auf das Greifprofil 16 gebracht, wird dieses über die Schwenkachse 19 von der Förderunterlage 1 weg nach oben geschwenkt, so dass sich das Anschlagelement 39 mit seinem freien Ende 40 vom Gegenanschlagelement 41 bzw. von der Unterseite 42 des entsprechenden Anschlag-Querbügels löst. Verlässt nach vollbrachtem Stirnrand-Hochstellen das Teigstück den Hochstelldurchgang 14 (vgl. Figur 1, 5 und 18), schwenkt die Hebellasche 17 mit dem Greifprofil 16 wieder zurück in Richtung zur Förderunterlage 1. Damit es aber nicht zum direkten Kontakt und zur Auflage auf der Förderunterlage 1 mit dem Greifprofil 16 kommt (was Beschädigungen der Förderunterlage 1 verursachen könnte), sorgt die Schwenkhubbegrenzung mit dem Anschlagelement 39, insbesondere dem Anschlagkopf 40 durch Anschlag an die Unterseite 42 des Gegenanschlagelements 41 (Anschlag-Querbügel) dafür, dass der Sicherheitsabstand des Greifprofils 16 gegenüber der Förderunterlage 1 bzw. der Hochstelldurchgang mit seiner Mindesthöhe eingehalten wird.

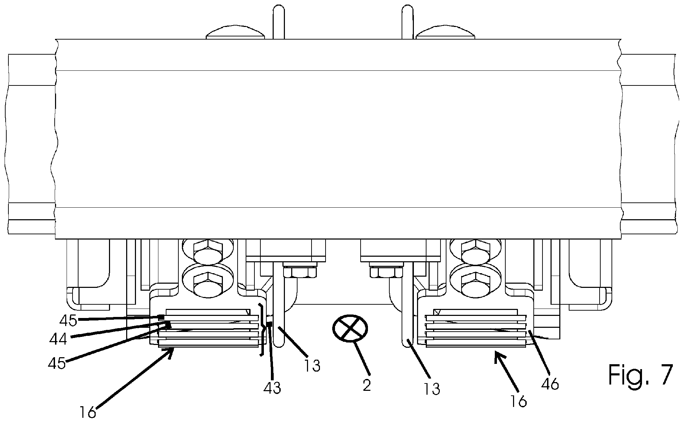

In der Stirnansicht der Figur 7 verläuft die Förderrichtung 2 senkrecht in die Zeichenebene hinein, so dass der gegenüber der Förderunterlage 1 schräg verlaufende Schräg-Eingangsbereich 43 des Hochstelldurchgangs 14 stirnseitig sichtbar wird. Wie auch aus Figuren 1 und 5 erkennbar, ergibt sich dadurch in Förderrichtung 2 eine keilartige Verengung des Hochstelldurchgangs 14 für den ankommenden Stirnrand 54 eines angelieferten Teigstücks.

Gemäß Figur 7 ist das Greifprofil 16 mit durchgehenden Durchgangsschlitzen 44 gestaltet, die jeweils von zwei Querstegen 45 begrenzt sind. Letztere sind, sich mit ihrer Längsrichtung quer zur Förderrichtung 2 erstreckend, auf einen Tragrahmen 46 etwa entgegen der Förderrichtung 2 und nach dem Schräg-Eingangsbereich 43 zur Förderunterlage 1 vorspringend aufgeschweißt oder aufgelötet. Damit ergibt sich eine Realisierung des Greifprofils 16 mit einer leiter- und/oder sprossenartigen Struktur.

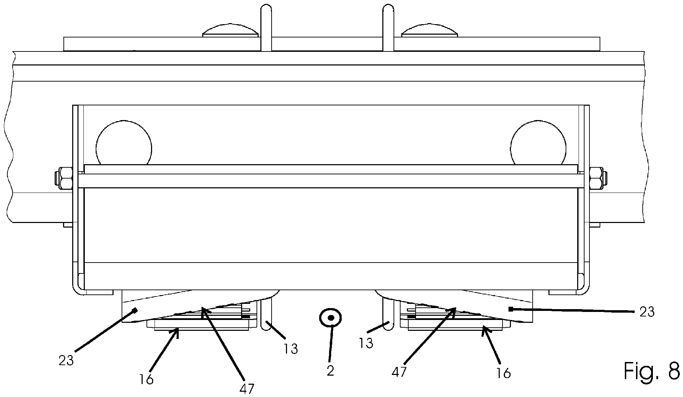

Bei der Stirnansicht gemäß Figur 8 verläuft die Förderrichtung 2 aus der Zeichenebene heraus. Vor den Greifprofilen 16 sind die Wickellatten 23 mit ihren Stirnseiten und den gegenüber der Förderunterlage 1 abgeschrägten Wickel-Unterwandungen 47 sichtbar. Mit dem Ansteigen der Wickel-Unterwandungen 47 schräg nach innen gegenüber der Förderunterlage 1 wird dem beim Wickelprozess entstehenden, expandierenden Mittelabschnitt des Teigwickels Rechnung getragen, welcher die für die Croissantform typische mittlere Ausbauchung bildet. Zur Anpassung daran trägt zusätzlich noch die oben erläuterte, schwimmende Lagerung der Wickellatten 23 bei, die unter anderem ein gewisses Bewegungsspiel in einer Ebene etwa parallel zur Förderunterlage ermöglicht. Zudem sind im Rahmen der schwimmenden Lagerung Kippbewegungen der Wickellatten 23 um Achsen denkbar, die parallel zur Förderrichtung 2 verlaufen.

In der Unteransicht gemäß Figur 9 sind die im Rahmen der schwimmenden Lagerung mit Bewegungsspiel erfolgenden Ausgleichsbewegungen 26, 27 eingezeichnet. Die abgeschrägten Wickel-Unterwandungen 47 der Wickellatten 23 sind zur Erhöhung ihrer Reibschlüssigkeit mit dem darunter in Eingriff kommenden Teigstück mit z. B. einer karoartigen Struktur aufgeraut.

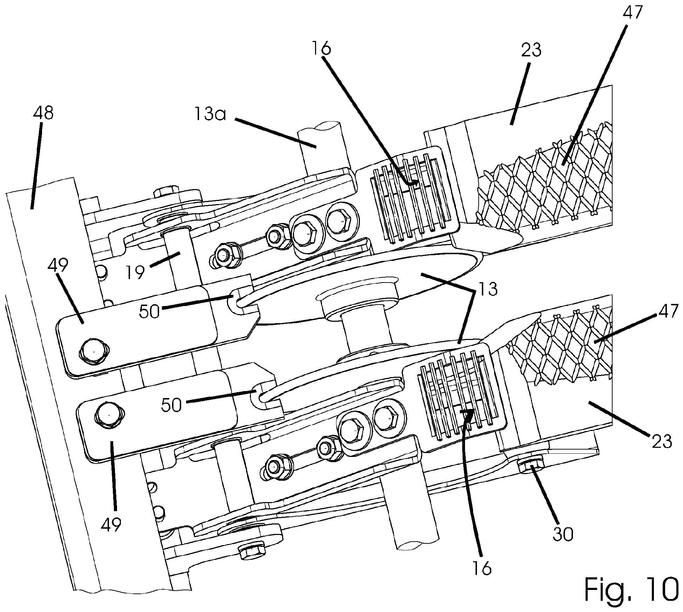

Gemäß Figur 10 sind an der Unterseite eines Maschinenrahmenteils 48 zum Beispiel plattenartige Abstreifelemente 49 befestigt, die zu je einer der Andrückscheiben 13 vorspringen. Am freien Ende sind sie mit U-förmigen Aussparungen 50 versehen, in welche die Andrückscheiben 13 mit ihrem jeweiligen Umfangsrand eingerückt sind, wodurch Teigabrieb oder dergleichen abgestreift werden kann.

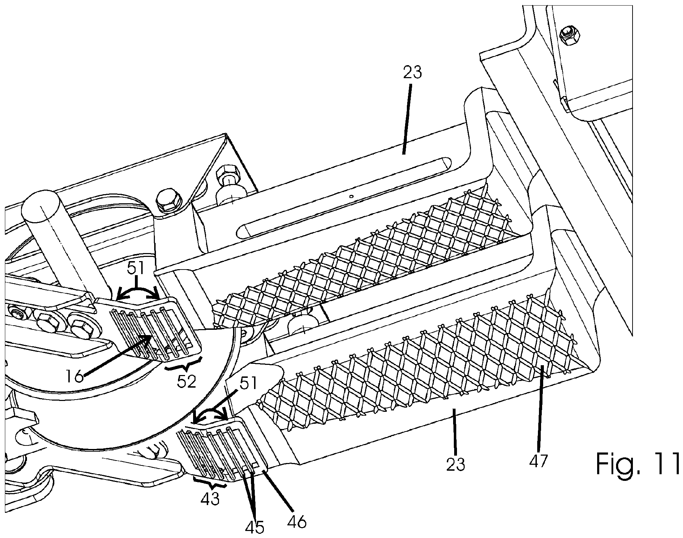

Gemäß Figur 11 ist der Tragrahmen 46 für die Querstege 45 über einen stumpfen Winkel 51 in zwei Abschnitte unterteilt, nämlich den bereits beschriebenen Schräg-Eingangsbereich 43 und den ab der Eckkante des stumpfen Winkels 51 einsetzenden Schmalbereich 52. Der bereits beschriebene Hochstelldurchgang 14 ist aus diesen beiden Bereichen 43, 52 zusammengesetzt, wenn die Förderunterlage gegenüber liegt.

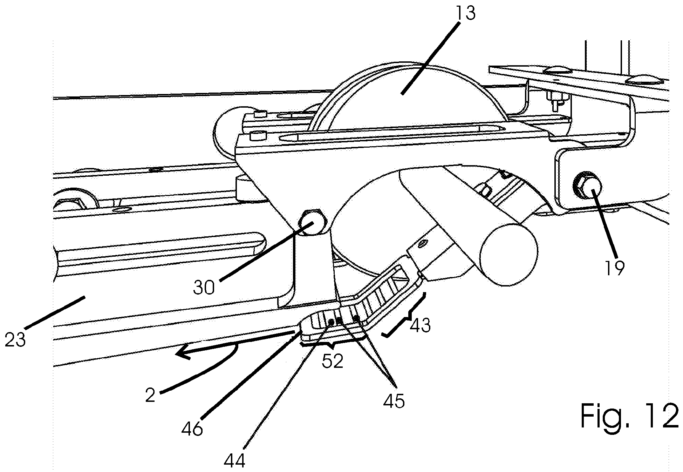

Gemäß Figur 12 begrenzen die Querstege 45, gegebenenfalls zusammen mit dem Tragrahmen 46, die Durchgangsschlitze 44, wodurch sich für das Greifprofil 16 eine etwa rippenartige Struktur ergibt. Im Hinblick auf das beabsichtigte Hochstellen des stirnseitigen Teigstückrandes ist die Breite bzw. Weite der Durchgangsschlitze 44 entsprechend der Dicke der ankommenden Teigstücke bemessen. Gleichartiges gilt für die Dicke der Querstege 45. Ein beim Hochstellen entstehender Teigabrieb kann so leicht durch die Schlitze 44 hindurch gelangen, so dass ein Verstopfen des Greifprofils vermieden ist.

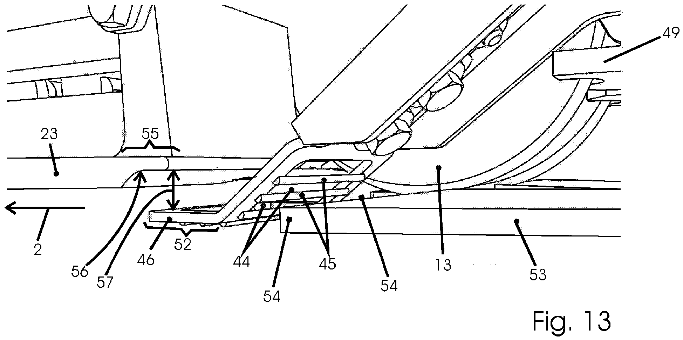

Gemäß Figur 13 ist ein Teigstück 53, das von den Andrückscheiben 13 auf die (nicht gezeichnete) Förderunterlage 1 gedrückt wird, gerade dabei, mit seinem stirnseitigen Rand 54 an die Querrippen bzw. -stege 45 mit den Durchgangsschlitzen 44 dazwischen anzustoßen. Der Tragrahmen 46 für die Querstege 45 befindet sich noch in seiner tiefsten Stellung, welche durch die Anschlagelemente 39 und das Gegenanschlagelement 41 gesichert ist. Ferner befindet sich der Tragrahmen 46 mit seinem Schmalbereich 52 zumindest teilweise unterhalb des in Förderrichtung gesehen hinteren Endbereichs 55 der Wickellatte 23. Dieser Endbereich ist an seiner der Förderunterlage 1 sowie der Oberseite des Tragrahmens 46 zugewandten Unterseite mit einer gegebenenfalls konkav gewölbten Eingangsschräge 56 gestaltet, welche bei der Anordnung nach Figur 13 der Oberseite des Schmalbereichs 52 des Tragrahmens 46 mit einem Abstand 57 zumindest teilweise gegenüber liegt. Dieser besitzt unmittelbar vor Auftreffen des Teigstücks 53 auf das Greifprofil 16 noch seine maximale Weite.

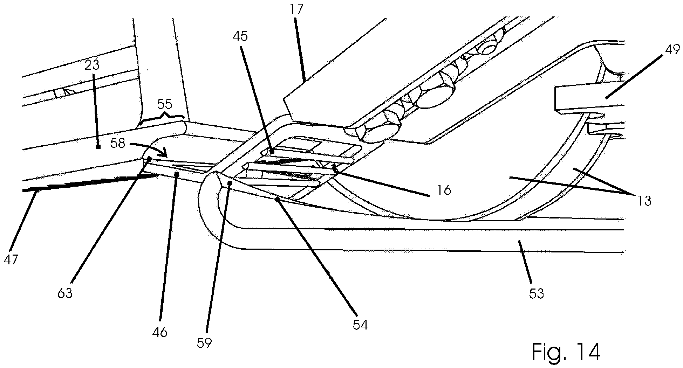

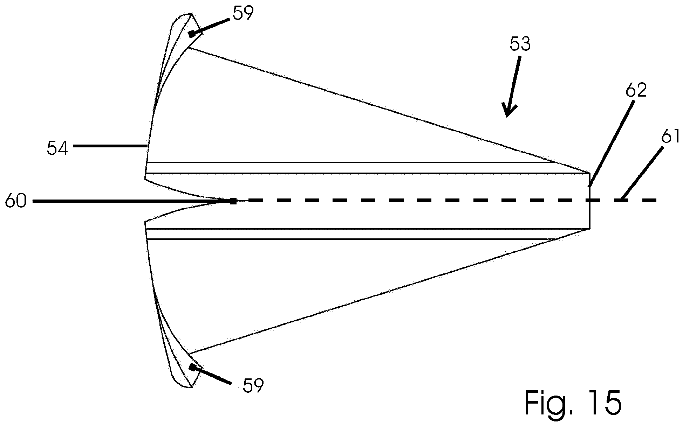

Bei der ersten Bearbeitungsphase gemäß Figur 14 hat sich der genannte Abstand 57 so verkleinert, dass der Stirnendenbereich des Tragrahmens 46 durch Anstoßen in Kontakt 58 mit der Eingangsschräge 56 im hinteren Endbereich 55 der Wickellatte 23 gelangt ist. Dies resultiert aus einem Anheben des Tragrahmens 46 durch das über die Förderunterlage gegen das Greifprofil 16 geschobene Teigstück 53. Dieses stößt dabei mit seinem stirnseitigen Rand 54 gegen die Querstege 45 des Greifprofils 16, wobei aufgrund der von der Förderunterlage ausgeübten Schubkraft zum einen das Greifprofil 16 nebst Hebellasche 17 angehoben wird, und zum anderen der stirnseitige Rand 54 des Teigstücks 53 zumindest im Bereich der Stirnecke 59 hochgeklappt und umgebogen wird. Da dies mittels der parallel angeordneten Greifprofile 16 (siehe zum Beispiel Figur 7) an den beiden Stirnecken 59 des Teigstücks 53 erfolgt, ergibt sich die in Figur 15 gezeigte Verformung des Teigstücks 53, das eine gleichseitig-dreieckige Grundform aufweist. Dabei bildet der stirnseitige Rand 54 die Basis. Wie weiter oben beschrieben, wird mit der in Figur 2 gezeigten Streckeinrichtung die auf der Basis bzw. den stirnseitigen Rand 54 senkrecht stehende Höhe des gleichschenkligen Dreiecks verlängert. Das Umklappen zunächst der Stirnecken 59 und das anschließende Hochheben des gesamten stirnseitigen Rands 54 wird noch weiter erleichtert durch den mittigen Einschnitt 60, dessen gedachte Verlängerung 61 entsprechend der Dreieckshöhe durch die abgestumpfte Spitze 62 des gleichschenkligen Dreiecks verläuft. Anstelle der gleichschenkligen Dreieckform kann auch, wie an sich bekannt, eine Trapezform zur Bildung des Teigwickels für Croissants verwendet werden.

Gemäß Figur 14 wird mit dem beschriebenen Anheben des Greifprofils 16 und des Tragrahmens 46 durch das anstoßende Teigstück 53 der Anschlag bzw. Kontakt 58 des Tragrahmens 46 mit seiner Stirnkante 63 an der Eingangsschräge im hinteren Endbereich 55 der Wickellatte 23 hergestellt und mit zunehmender Förderbewegung des Teigstücks 53 intensiviert. Mit dem Anheben des Tragrahmens 46 durch den stirnseitigen Rand 54 bzw. die Stirnecken 59 des Teigstücks 53 und dem dabei entstehenden Kontakt 58 des Tragrahmens 46 am hinteren Endbereich 55 der Wickellatte 23 erfolgt auch ein Anheben letzterer gegenüber der Förderunterlage. Dies ergibt eine Vergrößerung des Abstands sowohl des Greifprofils 16 als auch der Wickel-Unterwandung 47 zur Förderunterlage, so dass das in der ersten Phase gemäß Figur 14 an seinen Stirnecken 59 hochgeklappte Teigstück 23 leichter in die (verbreiterte bzw. erhöhte) Wickelpassage 22 (siehe Figur 5) gelangen kann.

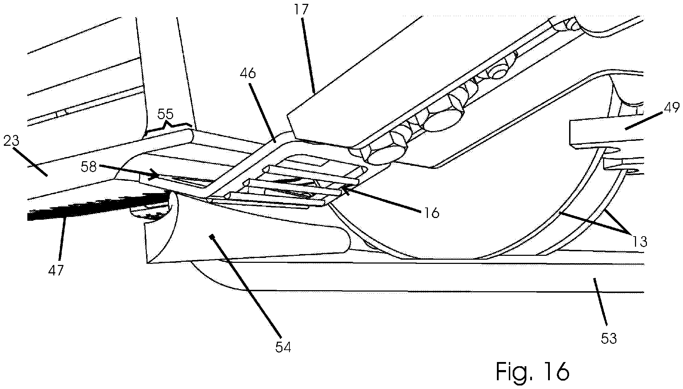

Indem gemäß Figur 16 (und auch Figur 14) der Tragrahmen 46 des Greifprofils 16 die Wickellatte 23 nicht nur untergreift, sondern beide sich auch teilweise überlappen (ein Teil der Eingangsschräge 56 der Wickellatte 23 überdeckt einen Teil der Oberseite des Schmalbereichs 52 des Greifprofils 16 - siehe Überlappungsbereich 21 in Figur 5), kommt es auch zu einer Überlappung bzw. Gleichzeitigkeit der ersten Phase des Hochklappens der Stirnecken 59 und der zweiten Phase des Umlegens, Einschlagens und/oder Einrollens des gesamten Stirnrandes 54 des Teigstücks 53. Etwa in der zweiten Phase gemäß Figur 16 sind sowohl das Greifprofil 16 als auch der hintere Endbereich 55 der Wickellatte 23 durch den sich einrollenden stirnseitigen Rand 54 des Teigstücks 53 maximal angehoben, so dass der Hochstelldurchgang als auch der Eingang in die Wickelpassage ihre maximale Höhe und Durchlässigkeit erhalten haben.

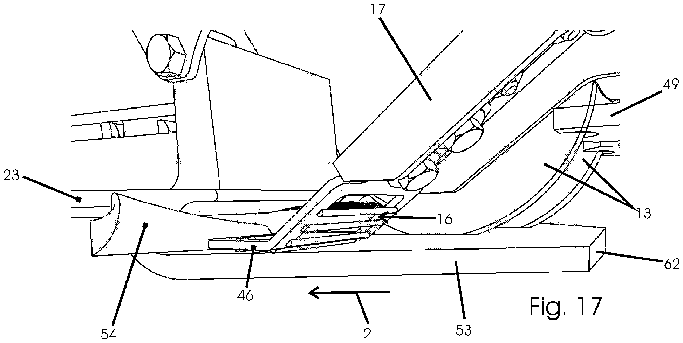

Gemäß Figur 17 wird die dritte Phase eingeleitet, wobei ausgehend vom stirnseitigen Teigstück-Rand 54 unterhalb der Wickellatten 23 der vollständige Teigwickel für Croissants oder dergleichen fertig gestellt wird. Die Wickelpassage 22 bzw. die Wickellatten 23 haben dabei weitgehend ihre Höhe gegenüber der Förderunterlage beibehalten, wohingegen aufgrund Verlassens der Wulst mit dem eingeschlagenen stirnseitigen Teigstück-Rand 54 der Tragrahmen 46 mit dem Greifprofil 16 sich absenkt und dabei zur Auflage auf die Oberfläche des Teigstücks 53 im in Förderrichtung 2 gesehen hinteren Bereich kommt.

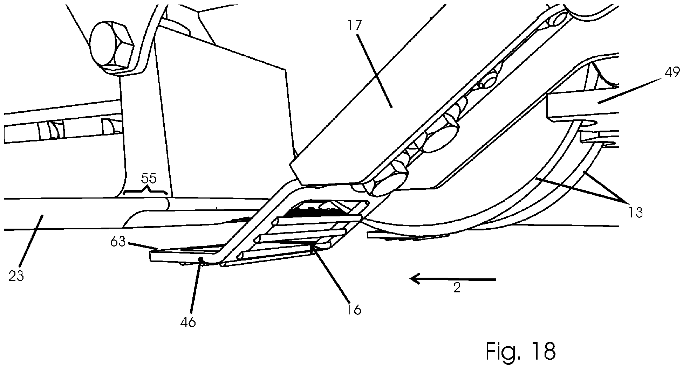

Gemäß Figur 18 hat das Teigstück 53 nun auch mit seiner hinteren Spitze 62 den Hochstelldurchgang unterhalb des Greifprofils 16 verlassen, so dass sich der Tragrahmen 46 mit dem Greifprofil 16 bis zum Zusammentreffen von Anschlagelement 39 und Gegenanschlagelement 41 weiter absenken kann. Dabei kommt es beim Hochstelldurchgang 14 nun zur minimalen Höhe bzw. Weite gegenüber der Förderunterlage 1, und das Greifprofil 16 ist zum Hochstellen des nächsten Teigstücks bereit. In der Wickelpassage kann sich das vorausgegangene Teigstück noch in der Verarbeitung befinden, während im Sinne einer überlappenden Verarbeitung das nächste Teigstück bereits in den Hochstelldurchgang gelangen kann.

### Bezugszeichenliste

- 1: Förderunterlage
- 2: Förderrichtung
- 3: Befeuchtungsstation
- 4: Wickelstation
- 5: Streckeinrichtung
- 6: Zuführförderband
- 7: Wegführförderband
- 8: Andrückriemen
- 9: Andrückrolle
- 9a: Andrückband
- 10: Antriebs- und Umlenkwellen
- 11: Querrolleinrichtung
- 12: Andrückdurchgang
- 13: Andrückscheibe
- 13a: Welle
- 14: Hochstelldurchgang
- 15: Füllgut-Spalt
- 16: Greifprofil
- 17: Hebellasche
- 18: Schwenkbewegung
- 19: Schwenkachse
- 20: Rahmenteil
- 21: Überlappungsbereich
- 22: Wickelpassage
- 23: Wickellatten
- 24: Langaufnahme
- 25: Andrückgewicht
- 26: Spreizspiel
- 27: Schwenkspiel
- 28: Einstellschraube
- 29: Schwenkhebel
- 30: Schwenkhebelachse
- 31: Ausgleichs-Schwenkbewegung
- 32: Vorderende der Wickellatte
- 33: Anschlagschulter
- 34: Endwickeldurchgang
- 35: Wickelplatte
- 35a: Wickelplattenschwenkbewegung
- 36: Hinterende
- 37: Plattenschwenkachse
- 38: Ansatz
- 39: Anschlagelement
- 40: Anschlagkopf/freies Ende
- 41: Gegenanschlagelement/Anschlag-Querbügel
- 42: Unterseite
- 43: Schräg-Eingangsbereich
- 44: Durchgangsschlitz
- 45: Quersteg
- 46: Tragrahmen
- 47: Wickel-Unterwandung
- 48: Maschinenrahmenteil
- 49: Abstreifelement
- 50: U-Aussparung
- 51: stumpfer Winkel
- 52: Schmalbereich
- 53: Teigstück
- 54: stirnseitiger Rand
- 55: hinterer Endbereich
- 56: Eingangsschräge
- 57: Abstand
- 58: Kontakt
- 59: Stirnende
- 60: Einschnitt
- 61: Verlängerung
- 62: Spitze
- 63: Stirnkante

## Patentansprüche

1. Verfahren zum maschinellen Herstellen eines gewickelten Teigprodukts aus einem Ausgangsteigstück (53), indem es mit einer Förderunterlage (1) gefördert und dabei in sich gerollt und/oder umgeschlagen wird, mit folgenden Phasen:
in einer ersten Phase (Fig.14) wird mittels eines oder mehrerer Hochstellmittel (16,45) das Ausgangsteigstück (53) an einer oder mehreren diskreten beziehungsweise vereinzelt beabstandeten Einzelrandstellen (59) oder Einzelrandabschnitten seines in Förderrichtung (2) vorauseilenden Stirnrandes (54) angehoben;
in einer zweiten Phase (Fig.16) wird, ausgehend jeweils von der angehobenen Einzelrandstelle (59) oder dem angehobenen Einzelrandabschnitt, der Stirnrand (54) beim Anheben der Einzelrandstelle(n) oder Einzelrandabschnitte mittels eines oder mehrere Wickelorgane (23) mitgenommen und/oder eingeschlagen;
und in einer dritten Phase (Fig.17) wird mittels des oder der mehreren Wickelorgane, von dem bereits angehobenen und/oder eingeschlagenen Stirnrand ausgehend, das Ausgangsteigstück (53) eingerollt und/oder nach innen geschlagen;
wobei Hochstellmittel (16,45) verwendet werden, die unabhängig von den Wickelorganen (23) verstellbar sind,
**dadurch gekennzeichnet, dass**
das oder die Hochstellmittel (16,45) bei und/oder durch Kontakt mit dem oder den Ausgangsteigstücken (53) derart zur Einwirkung und/oder zur Anlage auf das oder die Wickelorgane (23) gebracht werden, dass der Abstand des oder der Wickelorgane (23) zur Förderunterlage (1) vergrößert und dabei ein direkter Durchgang und/oder Übergang für ein jeweils angeliefertes Ausgangsteigstück (53) von den Hochstellmitteln (16,45) zu den Wickelorganen (23) geschaffen wird.

2. Verfahren nach Anspruch 1, **dadurch gekennzeichnet, dass** die erste und die zweite Phase einander zeitlich und/oder örtlich überlappend durchgeführt werden.

3. Verfahren nach Anspruch 1 oder 2, **dadurch gekennzeichnet, dass** der Abstand des oder der Hochstellmittel (16,45) zur Förderunterlage (1) bei und/oder durch Kontakt mit den Ausgangsteigstücken (53) vergrößert wird.

4. Verfahren nach Anspruch 3, **dadurch gekennzeichnet, dass** mit oder nach Beendigung der ersten Phase (Fig.14) der Abstand des oder der Hochstellmittel (16,45) zur Förderunterlage (1) bis zu einem nachfolgenden Kontakt mit einem oder mehreren nächsten Ausgangsteigstücken (53) verkleinert wird, während der vergrößerte Abstand des oder der Wickelorgane (23) zur Förderunterlage (1) bis zur Beendigung der dritten Phase (Fig. 17) erweitert oder zumindest beibehalten wird.

5. Verfahren nach einem der vorangehenden Ansprüche, **dadurch gekennzeichnet, dass** die Hochstellmittel (16,45) mit dem Kontakt mit einem angelieferten Ausgangsteigstück (53) eine mit dem oder den Wickelorganen (23) gemeinsame Ebene für den Durchgang oder Übergang des oder der Ausgangsteigstücke (53) bilden.

6. Verfahren nach einem der vorangehenden Ansprüche, **dadurch gekennzeichnet, dass** zumindest die erste und die zweite Phase auf einer gemeinsamen Förderunterlage (1) durchgeführt werden.

7. Verfahren nach einem der vorangehenden Ansprüche, **dadurch gekennzeichnet, dass** für die zweite Phase (Fig.16) einer oder mehrere beweglich und/oder frei schwimmend gelagerte Wickelorgane (23) verwendet werden, die auf Krafteinwirkung durch das im Wickelprozeß befindliche Ausgangsteigstück (53) und/oder der vorgeschalteten Hochstellmittel (16,45) mit Ausweich- oder Ausgleichbewegungen (26,27,31) reagieren.

8. Verfahren nach einem der vorangehenden Ansprüche, **dadurch gekennzeichnet, dass** ein oder mehrere Wickelorgane (23) verwendet werden, die um eine quer zur Förderrichtung (2) verlaufende Rotationsachse (30) dreh- oder schwenkbar angelenkt sind, und bei Einwirkung und/oder Anlage des oder der Hochstellmittel (16,45) auf das oder die Wickelorgane (23) der Abstand der Rotationsachse (30) zur Förderunterlage (1) vergrößert wird.

9. Verfahren nach einem der vorangehenden Ansprüche, **dadurch gekennzeichnet, dass** das oder die Ausgangsteigstücke (53) vor Eintritt in die erste Phase (Fig.14) in Längs- und/oder Förderrichtung (2) verlängert beziehungsweise lang gezogen und/oder quer zur Längs- und/oder Förderrichtung (2) verbreitert werden.

10. Verfahren nach Anspruch 9, wobei ein Ausgangsteigstück (53) mit einem quer zur Förderrichtung (2) verlaufenden, vorauseilenden Stirnrand (54) verwendet wird, **dadurch gekennzeichnet, dass** das Teigstück längs einer senkrecht vom Stirnrand (54) ausgehenden Höhenlinie (60,61) gedehnt, gestreckt oder gezogen wird.

11. Verfahren nach Anspruch 9 oder 10, **dadurch gekennzeichnet, dass** das Ausgangsteigstück (53) zu seiner Verbreiterung quer zur Förderrichtung gewalzt wird, vorzugsweise nach dem Strecken oder Langziehen.

12. Verfahren nach einem der Ansprüche 9 bis 11, **dadurch gekennzeichnet, dass** die Förderunterlage (1) in Kombination mit einer in Förderrichtung (2) vorgeordneten Streckunterlage (6) zum Langziehen des Teigstücks (53) verwendet wird, wobei die Streckunterlage (6) stationär gehalten und/oder mit langsamerer Fördergeschwindigkeit als die Förderunterlage (1) betrieben wird, und das Ausgangsteigstück (53) sowohl auf die Förder- als auch die Streckunterlage (1,6) gedrückt wird.

13. Anordnung oder Vorrichtung zum Herstellen gewickelter Teigprodukte, insbesondere für die Durchführung des Verfahrens nach einem der vorangehenden Ansprüche, mit einer Teigstück-Transport- oder Förderunterlage(1), der eine Teigrand-Hochstelleinrichtung (16,45) und eine davon baulich getrennte und in Förderrichtung (2) nachgeschaltete Wickeleinrichtung (23) jeweils gegenüber liegen, wodurch ein Wirk- und/oder Wickeldurchgang (22) begrenzt wird, um zwischen der Hochstell- und der Wickeleinrichtung (16,45;23) einerseits und der Förderunterlage (1) andererseits ein Ausgangsteigstück (53) einzurollen und/oder in sich einzuschlagen, und wobei die Hochstelleinrichtung (16,45) in ihrer Stellung durch ein angefördertes Ausgangsteigstück (53) versetzbar, verschwenkbar oder sonst verstellbar oder bewegbar und die Wickeleinrichtung (23) verstellbar gelagert sind, **dadurch gekennzeichnet, dass** die Hochstelleinrichtung (16,45) mit der nachgeschalteten Wickeleinrichtung (23) derart in Wirkungsverbindung steht, dass die Wickeleinrichtung (23) von der verstellten Hochstelleinrichtung (16,45) in eine Stellung zur Aufnahme oder zum Erfassen der stirnrandseitig hochgestellten Ausgangsteigstücke (53) versetzbar oder versetzt ist.

14. Anordnung oder Vorrichtung nach Anspruch 13, **dadurch gekennzeichnet, dass** die Hochstelleinrichtung (16,45) zumindest teilweise derart zwischen der Wickeleinrichtung (23) und der Förderunterlage (1) und/oder unterhalb oder schräg unterhalb der Wickeleinrichtung (23) angeordnet ist, dass die Wickeleinrichtung (23) unter Vergrößerung ihres Abstands zur Förderunterlage (1) von der von einem ankommenden Ausgangsteigstück (53) verstellten Hochstelleinrichtung (16,45) untergreifbar, anhebbar und/oder mitnehmbar ist.

15. Anordnung oder Vorrichtung nach einem der vorangehenden Ansprüche, **dadurch gekennzeichnet, dass** die Wickeleinrichtung (23) in ihrem Eingangsbereich und/oder im Eingriffsbereich (63) der Hochstelleinrichtung mit Abschrägungen (56) oder Ausnehmungen gestaltet ist.

16. Anordnung oder Vorrichtung nach einem der vorangehenden Ansprüche, **dadurch gekennzeichnet, dass** die Wickeleinrichtung (23) zumindest in einer oder mehreren Ebenen senkrecht und/oder parallel zur Förderunterlage (1) translatorisch und/oder rotatorisch auslenkbar oder sonst schwimmend gelagert ist.

17. Anordnung oder Vorrichtung nach einem der vorangehenden Ansprüche, **dadurch gekennzeichnet, dass** die Wickeleinrichtung (23) in einer Richtung quer zur Förderrichtung (2) verschiebbar gelagert ist.

18. Anordnung oder Vorrichtung nach einem der vorangehenden Ansprüche, **dadurch gekennzeichnet, dass** die Hochstelleinrichtung (16,45) und/oder die Wickeleinrichtung (23) um eine oder je eine Achse (19,30) an einem Rahmen (20), Fundament,Schwenkhebel (29) oder einer sonstigen Basis drehbar gelagert und/oder verschwenkbar angelenkt sind, und die Achse (19) quer oder schräg zur Förderrichtung (2) verläuft.

19. Anordnung oder Vorrichtung nach Anspruch 18, **dadurch gekennzeichnet, dass** die Hochstelleinrichtung (16,45) an einer stationären Basis, und die Wickeleinrichtung (23) an der Hochstelleinrichtung (16,45) angelenkt sind.

20. Anordnung oder Vorrichtung nach Anspruch 18, **dadurch gekennzeichnet, dass** die Dreh- oder Schwenkachse (19) der Hochstelleinrichtung (16,45) an der Basis (20) stationär gehalten ist, und die Dreh- oder Schwenkachse der Wickeleinrichtung (30) in einer Ebene etwa quer zur Förderrichtung (2) bewegbar oder verstellbar vorzugsweise über die Hochstelleinrichtung (16,45) ist.

21. Anordnung oder Vorrichtung nach einem der vorangehenden Ansprüche, **dadurch gekennzeichnet, dass** die Wickeleinrichtung (23) an oder in einem oder mehreren Schwenkhebeln (29) drehbar gelagert oder schwenkbar (31) angelenkt ist, der oder die jeweils über eine stationären Schwenkachse (19) und/oder an einer stationären Basis angelenkt sind.

22. Anordnung oder Vorrichtung nach Anspruch 21 und einem der Ansprüche 18 bis 20, **dadurch gekennzeichnet, dass** die die Dreh- oder Schwenkachse (19) der Hochstelleinrichtung (16,45) und die Schwenkachse (19) des oder der Schwenkhebel (29) deckungsgleich verlaufen und/oder baulich integriert und/oder als ein Stück ausgeführt sind.

23. Anordnung oder Vorrichtung nach einem der vorangehenden Ansprüche, **dadurch gekennzeichnet, dass** die Wickeleinrichtung (23) eine oder mehrere, in Längsrichtung parallel liegende Wickelelemente, insbesondere Wickelleisten, -balken, - oder-latten, umfasst, die vorzugsweise voneinander gegebenenfalls entsprechend einem Füllgut auf der Oberfläche des Ausgangsteigstücks (53) beabstandet und/oder im Rahmen eines Lagerspiels auseinander spreizbar sind.

24. Anordnung oder Vorrichtung nach Anspruch 23, **dadurch gekennzeichnet, dass** die Wickelelemente (23) in Querrichtung derart mit Spiel gelagert und/oder verschwenkbar sind, dass sie durch von den angeförderten Teigstücken (53) ausgeübte Kräfte quer zur Förderrichtung (2) verstellbar sind.

25. Anordnung oder Vorrichtung nach einem der vorangehenden Ansprüche, **dadurch gekennzeichnet, dass** die Hochstelleinrichtung (16,45) und/oder Wickeleinrichtung (23) mit Mitteln (25) zur Gewichtsverstellung versehen sind, die vorzugsweise in Längs- und/oder Förderrichtung (2) verschiebbar oder verstellbar gelagert sind.

26. Anordnung oder Vorrichtung nach einem der vorangehenden Ansprüche, **dadurch gekennzeichnet, dass** dem Wickeldurchgang (22) ein quer zur Förderrichtung (2) wirkendes Querroll- oder Querwalzgerät (11), eine parallel zur Förderrichtung (2) wirkende Teig-Streckeinrichtung (5) und/oder eine Füll- oder Befeuchtungsstation (3) vorgeschaltet sind.

## Claims

1. A method for mechanically producing a coiled dough product from a starting dough piece (53), by it being conveyed with a conveying structure (1) and in so doing, being rolled inward and/or turned, with the following phases:
in a first phase (Fig. 14), by means of one or more height-adjustment means (16, 45), the starting dough piece (53) is raised at one or more discrete or individually spaced individual edge points (59) or individual edge sections of its front edge (54) in front, in direction of travel (2);
in a second phase (Fig. 16), proceeding respectively from the raised individual edge point (59) or the raised individual edge section, when raising up the individual edge point(s) or individual edge sections, the front edge (54) is entrained and/or wrapped by means of one or more coiling members (23);
and in a third phase (Fig. 17), by means of the one or more coiling member(s), the starting dough piece (53) is rolled inwards and/or folded inwards, proceeding from the already raised-up and/or wrapped front edge;
wherein height-adjustment means (16, 45) are used which can be adjusted regardless of the coiling members (23),
**characterised in that**
upon and/or due to contact with the starting dough piece(s) (53), the height-adjustment means (16, 45) act on and/or attach to the coiling member(s) (23) such that the distance between the coiling member(s) (23) and the conveying structure (1) is increased, and in so doing, a direct passage and/or transfer from the height-adjustment means (16, 45) to the coiling members (23) is achieved for a respectively delivered starting dough piece (53).

2. The method according to claim 1, **characterised in that** the first and the second phase are carried out in chronological and/or spatial overlap.

3. The method according to claim 1 or 2, **characterised in that** the distance between the height-adjustment means (16, 45) and the conveying structure (1) is increased upon and/or due to contact with the starting dough pieces (53).

4. The method according to claim 3, **characterised in that** with or after the end of the first phase (Fig. 14), the distance between the height-adjustment means (16, 45) and the conveying structure (1) is decreased up to a subsequent contact with one or more subsequent starting dough pieces (53), while the increased distance between the coiling member(s) (23) and the conveying structure (1) is extended or at least maintained up to the end of the third phase (Fig. 17).

5. The method according to one of the preceding claims, **characterised in that** the height-adjustment means (16, 45) form, with the contact with a delivered starting dough piece (53), a common plane with the coiling member(s) (23) for the passage or transfer of the starting dough piece(s) (53).

6. The method according to one of the preceding claims, **characterised in that** at least the first and the second phase are carried out on a common conveying structure (1).

7. The method according to one of the preceding claims, **characterised in that**, for the second phase (Fig. 16), one or more movable and/or freely floating coiling members (23) are used which react, with evasive movements or compensation movements (26, 27, 31), to the application of force by the starting dough piece (53) in the coiling process and/or the upstream height-adjustment means (16, 45).

8. The method according to one of the preceding claims, **characterised in that** one or more coiling members (23) are used which are steered rotatable or swivellable about an axis of rotation (30) running transverse to the direction of travel (2), and the distance between the axis of rotation (30) and the conveying structure (1) is increased due to the action and/or attachment of the height-adjustment means (16, 45) on the coiling member(s) (23).

9. The method according to one of the preceding claims, **characterised in that**, before entering the first phase (Fig. 14), the starting dough piece(s) (53) is (are) extended or elongated in longitudinal direction and/or direction of travel (2), and/or are widened transverse to the longitudinal direction and/or direction of travel (2).

10. The method according to claim 9, wherein a starting dough piece (53) is used with a front edge (54) running transverse to the direction of travel (2) in front, **characterised in that** the dough piece is stretched, extended or drawn along a height line (60, 61), proceeding perpendicular from the front edge (54).

11. The method according to claim 9 or 10, **characterised in that** the starting dough piece (53) is milled transverse to the direction of travel, for the widening thereof, preferably after extending or drawing.

12. The method according to one of claims 9 to 11, **characterised in that** the conveying structure (1) is used in combination with a stretching structure (6) arranged in front, in direction of travel (2), for elongating the dough piece (53), wherein the stretching structure (6) is held fixed and/or is operated at a slower speed of travel than the conveying structure (1), and the starting dough piece (53) is pressed both onto the conveying structure and the stretching structure (1, 6).

13. An arrangement or device for producing coiled dough products, in particular for carrying out the method according to one of the preceding claims, with a dough-piece-transporting or conveying structure (1), in which a dough-edge height-adjustment device (16, 45) and a coiling device (23), structurally separated therefrom and downstream therefrom in direction of travel (2), are opposite one another, whereby a knitting and/or coiling passage (22) is limited, in order to roll a starting dough piece (53), and/or turn it in on itself, between the height-adjustment device and the coiling device (16, 45;23) on the one hand and the conveying structure (1) on the other hand, and wherein the height-adjustment device (16, 45) is housed displaceable, swivellable or otherwise adjustable or movable, in terms of the position thereof, by a conveyed starting dough piece (53), and the coiling device (23) is housed adjustable, **characterised in that** the height-adjustment device (16, 45) is actively connected to the downstream coiling device (23) such that the coiling device (23) can be or is displaced by the adjusted height-adjustment device (16, 45) into a position for receiving or collecting the front-edge-side height-adjusted starting dough pieces (53).

14. The arrangement or device according to claim 13, **characterised in that** the height-adjustment device (16, 45) is arranged at least partially between the coiling device (23) and the conveying structure (1) and/or below or inclined below the coiling device (23) such that, by increasing the distance between same and the conveying structure, the coiling device (23) can be gripped from below, raised and/or entrained by the height-adjustment device (16, 45) adjusted by an arriving starting dough piece (53).

15. The arrangement or device according to one of the preceding claims, **characterised in that** the coiling device (23) is designed with taperings (56) or recesses in its entry area and/or in the engagement area (63) of the height-adjustment device.

16. The arrangement or device according to one of the preceding claims, **characterised in that** the coiling device (23) is housed, in translational and/or rotational manner, deflectable or otherwise floating at least in one or more planes perpendicular and/or parallel to the conveying structure (1).

17. The arrangement or device according to one of the preceding claims, **characterised in that** the coiling device (23) is displaceably housed in a direction transverse to the direction of travel (2).

18. The arrangement or device according to one of the preceding claims, **characterised in that** the height-adjustment device (16, 45) and/or the coiling device (23) is/are rotatably housed and/or swivellably housed about an axis (19, 30) or an axis each, on a frame (20), base swing lever (29) or any other base, and the axis (19) runs perpendicular or inclined to the direction of travel (2).

19. The arrangement or device according to claim 18, **characterised in that** the height-adjustment device (16, 45) is steered on a stationary base, and the coiling device (23) is steered on the height-adjustment device (16, 45).

20. The arrangement or device according to claim 18, **characterised in that** the rotation or swivel axis (19) of the height-adjustment device (16, 45) is held stationary on the base (20), and the rotation or swivel axis of the coiling device (30) can be moved or adjusted in a plane approximately transverse to the direction of travel (2), preferably via the height-adjustment device (16, 45).

21. The arrangement or device according to one of the preceding claims, **characterised in that** the coiling device (23) is rotatably housed or swivellably (31) steered at or in one or more swing levers (29), which are steered respectively via a stationary swivel axis (19) and/or at a stationary base.

22. The arrangement or device according to claim 21 and one of claims 18 to 20, **characterised in that** the rotation axis or swivel axis (19) of the height-adjustment device (16, 45) and the swivel axis (19) of the swing lever(s) (29) run congruent and/or are structurally integrated and/or are designed as one piece.

23. The arrangement or device according to one of the preceding claims, **characterised in that** the coiling device (23) comprises one or more coiling elements, in particular coiling ridges or joists or battens lying parallel in longitudinal direction, which are preferably separate from one another optionally corresponding to a product on the surface of the starting dough piece (53) and/or can be forced apart from one another within the scope of a bearing play.

24. The arrangement or device according to claim 23, **characterised in that** the coiling elements (23) are housed and/or can be swivelled in transverse direction with play such that they can be adjusted transverse to the direction of travel (2) by the forces exerted by the conveyed dough pieces (53).

25. The arrangement or device according to one of the preceding claims, **characterised in that** the height-adjustment device (16, 45) and/or coiling device (23) are provided with means (25) for adjusting weight, which are housed displaceable or adjustable preferably in longitudinal direction and/or direction of travel (2).

26. The arrangement or device according to one of the preceding claims, **characterised in that** a gravity roller or cross roller (11) acting transverse to the direction of travel (2), a dough-stretching device (5) acting parallel to the direction of travel (2) and/or a filling or humidifying station (3) are upstream of the coiling passage (22).

## Revendications

1. Procédé de fabrication mécanisé d'un produit pâteux enroulé à partir d'un morceau de pâte de départ (53), en le transportant avec un support de transport (1) et en l'enroulant pour cela sur lui-même et/ou en le repliant, comprenant les phases suivantes :
au cours d'une première phase (Fig. 14), le morceau de pâte de départ (53) est soulevé au moyen d'un ou plusieurs moyens de levage (16, 45) en un ou plusieurs points de bord individuels (59) discrets ou espacés sporadiquement ou en des parties de bord individuelles de son bord antérieur (54) qui précèdent dans la direction de transport (2) ;
au cours d'une deuxième phase (Fig. 16), à partir du point de bord individuel surélevé (59) ou de la partie de bord individuelle surélevée, le bord antérieur (54) est entraîné et/ou enfoncé lorsque le point de bord individuel ou les parties de bord individuelles sont relevés au moyen d'un ou plusieurs éléments d'enroulement (23) ;
et au cours d'une troisième phase (Fig. 17), le morceau de pâte de départ (53) est enroulé et/ou replié vers l'intérieur à l'aide d'un ou plusieurs éléments d'enroulement, à partir du bord antérieur déjà relevé et/ou replié ;
dans lequel on utilise des moyens de levage (16, 45) qui sont réglables indépendamment des éléments d'enroulement (23),
**caractérisé en ce que**
le ou les moyens de levage (16, 45) sont amenés à agir et/ou à porter sur le ou les éléments d'enroulement (23) pendant et/ou par contact avec le ou les morceaux de pâte de départ (53) de telle sorte que la distance entre le ou les éléments d'enroulement (23) et le support de transport (1) est augmentée et un passage direct et/ou un passage de transition est assuré depuis les moyens de levage (16, 45) vers les éléments d'enroulement (23) pour un morceau de pâte de départ (53) respectif délivré.

2. Procédé selon la revendication 1, **caractérisé en ce que** les première et deuxième phases sont réalisées en se chevauchant dans le temps et/ou dans l'espace.

3. Procédé selon la revendication 1 ou 2, **caractérisé en ce que** la distance entre le ou les moyens de levage (16, 45) et le support de transport (1) est augmentée pendant et/ou par contact avec les morceaux de pâte de départ (53).

4. Procédé selon la revendication 3, **caractérisé en ce qu'**avec ou après l'achèvement de la première phase (Fig. 14), la distance des moyens de levage (16, 45) vis-à-vis du support de transport (1) est réduite jusqu'à un contact ultérieur avec un ou plusieurs morceaux de pâte de départ (53) suivants, tandis que la distance accrue du ou des éléments d'enroulement (23) vis-à-vis du support de transport (1) est augmentée ou du moins maintenue au cours de la troisième phase (Fig. 17).

5. Procédé selon l'une des revendications précédentes, **caractérisé en ce que** les moyens de levage (16, 45) forment au contact d'un morceau de pâte de départ (53) délivré un plan commun au ou aux éléments d'enroulement (23) pour le passage direct ou le passage de transition du ou des morceaux de pâte de départ (53).

6. Procédé selon l'une des revendications précédentes, **caractérisé en ce qu'**au moins les première et deuxième phases sont réalisées sur un support de transport (1) commun.

7. Procédé selon l'une des revendications précédentes, **caractérisé en ce que**, pour la deuxième phase (figure 16), on utilise un ou plusieurs éléments d'enroulement (23) montés de manière mobile et/ou flottante, qui réagissent avec des mouvements (26, 27, 31) de fuite ou de compensation à l'application d'une force par le morceau de pâte de départ (53) dans le processus d'enroulement et/ou par le moyen de levage amont (16, 45).

8. Procédé selon l'une des revendications précédentes, **caractérisé en ce que** l'on utilise un ou plusieurs éléments d'enroulement (23), lesquels sont articulés de manière à pouvoir tourner ou pivoter autour d'un axe de rotation (30) s'étendant transversalement par rapport à la direction de transport (2), et la distance entre l'axe de rotation (30) et le support de transport (1) est accrue lorsque le ou les moyens de levage (16, 45) agissent et/ou appuient sur le ou les éléments d'enroulement (23).

9. Procédé selon l'une des revendications précédentes, **caractérisé en ce que** le ou les morceaux de pâte de départ (53) sont étirés ou allongés et/ou élargis transversalement par rapport à la direction longitudinale et/ou de transport (2) avant d'entrer dans la première phase (figure 14) dans la direction longitudinale et/ou de transport (2).

10. Procédé selon la revendication 9, dans lequel on utilise un premier morceau de pâte de départ (53) avec un bord d'extrémité avant (54) s'étendant transversalement par rapport à la direction de transport (2), **caractérisé en ce que** le morceau de pâte est étiré ou tiré le long d'une ligne (60, 61) qui s'étend perpendiculairement à partir du bord d'extrémité avant (54).

11. Procédé selon la revendication 9 ou 10, **caractérisé en ce que** le morceau de pâte initial (53) est roulé transversalement par rapport à la direction de transport pour l'élargir, de préférence après étirage ou allongement.

12. Procédé selon l'une des revendications 9 à 11, **caractérisé en ce que** le support de transport (1) est utilisé en combinaison avec une base d'étirage (6) disposée en amont dans la direction de transport (2) pour allonger le morceau de pâte (53), dans lequel la base d'étirage (6) est maintenue fixe et/ou entraînée à une vitesse de transport plus faible que le support de transport (1), et le morceau de pâte de départ (53) est poussé à la fois contre le support de transport et contre la base d'étirage (1,6).

13. Agencement ou dispositif pour la fabrication de produits de pâte enroulés, en particulier pour la mise en oeuvre du procédé selon l'une des revendications précédentes, comprenant un support (1) de transport ou un transporteur de morceaux de pâte, qui est opposé à un dispositif de levage de morceaux de pâte (16, 45) et à un dispositif d'enroulement (23) séparé structurellement et disposé en aval dans la direction de transport (2), par lesquels un passage (22) direct et/ou sinueux est ainsi délimité, entre le dispositif de levage et le dispositif d'enroulement (16, 45 ; 23), d'une part, et le support de transport (1), d'autre part, un morceau de pâte de départ (53) est enroulé et/ou replié sur lui-même, et dans lequel le dispositif de levage (16, 45) est déplaçable, pivotant ou autrement réglable ou mobile dans sa position par un morceau de pâte de départ (53) en cours de transport, et le dispositif d'enroulement (23) est monté de manière réglable, **caractérisé en ce que** le dispositif de levage (16, 45) est relié de manière opérationnelle au dispositif d'enroulement (23) en aval de telle sorte que le dispositif d'enroulement (23) peut être déplacé ou décalé par le dispositif de levage (16, 45) déplacé dans une position pour recevoir ou saisir les morceaux de pâte de départ (53) relevés selon leur bord antérieur.

14. Agencement ou dispositif selon la revendication 13, **caractérisé en ce que** le dispositif de levage (16, 45) est disposé au moins partiellement entre le dispositif d'enroulement (23) et le support de transport (1) et/ou en dessous ou obliquement en dessous du dispositif d'enroulement (23) de telle sorte que le dispositif d'enroulement (23) puisse être saisi, soulevé et/ou entraîné par le dispositif de levage (16, 45), qui est sollicité par un morceau de pâte de départ (53) arrivant, en augmentant sa distance vis à vis du support de transport (1).

15. Agencement ou dispositif selon l'une des revendications précédentes, **caractérisé en ce que** le dispositif d'enroulement (23) est conçu avec des chanfreins (56) ou des évidements dans sa zone d'entrée et/ou dans la zone d'engagement (63) du dispositif de levage.

16. Agencement ou dispositif selon l'une des revendications précédentes, **caractérisé en ce que** le dispositif d'enroulement (23) est monté au moins dans un ou plusieurs plans perpendiculairement et/ou parallèlement au support de transport (1), de telle sorte qu'il puisse être dévié par translation et/ou par rotation ou flotter autrement.

17. Agencement ou dispositif selon l'une des revendications précédentes, **caractérisé en ce que** le dispositif d'enroulement (23) est monté de manière mobile dans une direction transversale par rapport à la direction de transport (2).

18. Agencement ou dispositif selon l'une des revendications précédentes, **caractérisé en ce que** le dispositif de levage (16, 45) et/ou le dispositif d'enroulement (23) sont montés rotatifs et/ou articulés de manière pivotante autour d'un ou plusieurs axes (19, 30) sur un châssis (20), une fondation, un levier pivotant (29) ou une autre base, et l'axe (19) est transversal ou oblique par rapport à la direction de transport (2).

19. Agencement ou dispositif selon la revendication 18, **caractérisé en ce que** le dispositif de levage (16, 45) est articulé sur une base fixe, et le dispositif d'enroulement (23) est articulé sur le dispositif de levage (16, 45).

20. Agencement ou dispositif selon la revendication 18, **caractérisé en ce que** l'axe de rotation ou de pivotement (19) du dispositif de levage (16, 45) est maintenu immobile sur la base (20), et l'axe de rotation ou de pivotement du dispositif d'enroulement (30) peut être déplacé ou ajusté dans un plan approximativement transversalement par rapport à la direction de transport (2), de préférence par l'intermédiaire du dispositif de levage (16, 45).

21. Agencement ou dispositif selon l'une des revendications précédentes, **caractérisé en ce que** le dispositif d'enroulement (23) est monté rotatif ou pivotant (31) articulé sur ou dans un ou plusieurs leviers de pivotement (29), qui sont articulés chacun par un axe de pivotement fixe (19) et/ou sur une base fixe.

22. Agencement ou dispositif selon la revendication 21 et l'une des revendications 18 à 20, **caractérisé en ce que** l'axe de rotation ou de pivotement (19) du dispositif de levage (16, 45) et l'axe de pivotement (19) du ou des leviers pivotants (29) s'étendent de manière congruente et/ou sont intégrés structurellement et/ou réalisés en une pièce.

23. Agencement ou dispositif selon l'une des revendications précédentes, **caractérisé en ce que** le dispositif d'enroulement (23) comprend un ou plusieurs éléments d'enroulement parallèles répartis selon la direction longitudinale, en particulier des bandes d'enroulement, des barres ou des lamelles, qui sont de préférence espacés les uns des autres, correspondant éventuellement à un matériau de remplissage sur la surface du morceau de pâte de départ (53), et/ou qui peuvent être écartés les uns des autres dans un cadre de jeu de support.

24. Agencement ou dispositif selon la revendication 23, **caractérisé en ce que** les éléments d'enroulement (23) sont montés dans la direction transversale avec jeu et/ou pivotants de telle sorte qu'ils sont réglables transversalement par rapport à la direction de transport (2) par les forces exercées par les morceaux de pâte (53) transportés.

25. Agencement ou dispositif selon l'une des revendications précédentes, **caractérisé en ce que** le dispositif de levage (16, 45) et/ou le dispositif d'enroulement (23) sont pourvus de moyens (25) pour le réglage du poids qui sont montés de préférence de manière mobile ou réglable dans la direction longitudinale et/ou de transport (2).

26. Agencement ou dispositif selon l'une des revendications précédentes, **caractérisé en ce que** le passage d'enroulement (22) est précédé d'un dispositif de laminage transversal ou de laminage croisé (11) agissant transversalement par rapport à la direction de transport (2), d'un dispositif d'étirage de pâte (5) agissant parallèlement à la direction de transport (2), et/ou d'une station de remplissage ou de mouillage (3).
